# EUROPEAN PATENT APPLICATION

(11) **EP 3 217 611 A1**
(43) Date of publication of application: **13.09.2017**
(21) Application number: 15856929.3
(22) Date of filing: 05.11.2015
(51) Int. Cl.: H04L 12/801

(54) **MEDIA RESOURCE FEEDBACK METHOD AND DEVICE**

(30) Priority: 06.11.2014 CN 201410641975
(71) Applicant: Xiaomi Inc., Beijing 100085 (CN)
(72) Inventor: LIU, Tiejun, Beijing 100085 (CN); JIA, Guang, Beijing 100085 (CN); ZHANG, Pengfei, Beijing 100085 (CN)
(74) Representative: Perrot, Emilie
(86) International application number: PCT/CN2015/093855
(87) International publication number: WO 2016/070822

(57) **Abstract**

The present invention relates to a method and an apparatus for providing a media resource, and belongs to fields of network communication. The method includes: receiving by a router an access request, requesting for obtaining a specific media resource, sent from a terminal device; querying whether there is a media resource stored in the router corresponding to a data identifier, according to the data identifier carried in the access request; and providing the media resource stored in the router to the terminal device if the media resource corresponding to the data identifier is stored in the router. According to the present disclosure, it is solved a problem that network traffic may be wasted due to repeated forwarding of a same media resource accessing request to an extranet server from the router receiving the same as well as repeated transmission of a same media resource from the extranet server and, thus the network traffic can be saved.

## Description

### CROSS-REFERENCE TO RELATED APPLICATIONS

This application claims priority to Chinese Patent Application 201410641975.2, filed November 6, 2014, the entire contents of which are incorporated herein by reference.

### TECHNICAL FIELD

The present invention generally relates to fields of network communication, and more particularly, to a method and an apparatus for providing media resources.

### BACKGROUND

With increasing functions of electronic devices, the electronic devices are more and more frequently utilized by users. Extranet media resources, such as music and videos, are available to users at any time through their owned electronic devices from a home network.

When a media resource is to be obtained, an electronic device may firstly transmit an access address for accessing the media resource to a router. The router forwards the access address to a corresponding server and forwards the media resource, which is provided to the router by the server based on the access address, to the electronic device.

To implement the process disclosed above, however, at least following defects are found in prior arts. When a same access address is repeatedly received by the router, the access address may be always forwarded to an extranet server, and a same media resource will be always provided by the server, so that network traffic is wasted.

### SUMMARY

In order to overcome problems that network traffic may be wasted due to a repeated forwarding of a same access address to an extranet server from the router repeatedly receiving the access address, as well as due to a repeated transmission of a same media resource from the extranet server, there are provided a method and an apparatus for providing a media resource.

According to a first aspect of embodiments of the present invention, there is provided a method for providing a media resource, including:
receiving by a router an access request, requesting for obtaining a specific media resource, sent from a terminal device;
querying whether there is a media resource stored in the router corresponding to a data identifier, according to the data identifier carried in the access request; and
providing the media resource stored in the router to the terminal device if the media resource corresponding to the data identifier is stored in the router.

In some embodiment, the step of querying whether there is a media resource stored in the router corresponding to a data identifier, according to the data identifier carried in the access request includes:
querying whether there is a media resource stored in the router having a name identical to the data identifier, according to the data identifier carried in the access request;
or, the step of querying whether there is a media resource stored in the router corresponding to a data identifier, according to the data identifier carried in the access request includes:
   generating a character string uniquely corresponding to the data identifier by processing the data identifier carried in the access request according to a preset process rule for reducing characters of the data identifier to be processed; and
   querying whether there is a media resource stored in the router having a name identical to the character string.

In some embodiment, before the step of querying whether there is a media resource stored in the router corresponding to a data identifier, the method further includes:
determining a type of the media resource; and
the step of querying whether there is a media resource stored in the router corresponding to a data identifier includes: querying whether there is a media resource corresponding to the data identifier stored in a storage space, corresponding to the type, of the router.

In some embodiment, the method further includes:
forwarding the data identifier to a server corresponding to the media resource if there is not a media resource stored in the router corresponding to the data identifier, the data identifier triggering the server to provide the media resource corresponding to the data identifier to the router;
receiving the media resource provided by the server, providing the media resource received from the server to the terminal device; and
storing the media resource according to the data identifier.

In some embodiment, the step of storing the media resource according to the data identifier includes:
storing the media resource with the data identifier of the media resource, the data identifier of the media resource corresponding to the name of the media resource;
or, the step of storing the media resource according to the data identifier includes:
   generating a character string uniquely corresponding to the data identifier by processing the data identifier according to a preset process rule for reducing characters of the data identifier to be processed; and
   storing the media resource with the character string, the character string corresponding to the name of the media resource.

In some embodiment, the step of storing the media resource includes:
determining a type of the media resource; and
storing the media resource into a storage space corresponding to the type.

According to a second aspect of embodiments of the present invention, there is provided an apparatus for providing a media resource. The apparatus includes:
a request receiving module configured to receive at a router an access request, requesting for obtaining a specific media resource, sent from a terminal device;
a resource query module configured to query whether there is a media resource stored in the router corresponding to a data identifier, according to the data identifier carried in the access request received by the request receiving module; and
a first providing module configured to provide the media resource stored in the router to the terminal device if the resource query module determines that the media resource corresponding to the data identifier is stored in the router.

In some embodiment, the resource query module includes:
a first query submodule configured to query whether there is a media resource stored in the router having a name identical to the data identifier, according to the data identifier carried in the access request;
or, the resource query module includes:
   a first process submodule configured to generate a character string uniquely corresponding to the data identifier by processing the data identifier carried in the access request according to a preset process rule for reducing characters of the data identifier to be processed; and
   a second query submodule configured to query whether there is a media resource stored in the router having a name identical to the character string.

In some embodiment, the apparatus further includes:
a determination module configured to determine a type of the media resource; and
the resource query module is further configured to query whether there is a media resource corresponding to the data identifier stored in a storage space, corresponding to the type determined by the determination module, of the router.

In some embodiment, the apparatus further includes:
a resource forwarding module configured to forward the data identifier to a server corresponding to the media resource if the resource query module determines that there is not a media resource stored in the router corresponding to the data identifier, the data identifier triggering the server to provide the media resource corresponding to the data identifier to the router;
a second providing module configured to receive the media resource provided by the server and providing the media resource received from the server to the terminal device; and
a resource storage module configured to store the media resource according to the data identifier.

In some embodiment, the resource storage module includes:
a first storage submodule configured to store the media resource with the data identifier of the media resource, the data identifier of the media resource corresponding to the name of the media resource;
or, the resource storage module includes:
   a second process submodule configured to generate a character string uniquely corresponding to the data identifier by processing the data identifier according to a preset process rule for reducing characters of the data identifier to be processed; and
   the first storage submodule is further configured to store the media resource with the character string, the character string corresponding to the name of the media resource.

In some embodiment, the first storage submodule includes:
a determination submodule configured to determine a type of the media resource; and
a second storage submodule configured to store the media resource into a storage space corresponding to the type.

According to a third aspect of embodiments of the present invention, there is provided a device for providing a media resource, the device includes:
a processor; and
a memory for storing instructions executable by the processor;
wherein the processor is configured to perform:
   receiving at a router an access request, requesting for obtaining a specific media resource, sent from a terminal device;
   querying whether there is a media resource stored in the router corresponding to a data identifier, according to the data identifier carried in the access request; and
   providing the media resource stored in the router to the terminal device if the media resource corresponding to the data identifier is stored in the router.

The technical scheme according to embodiments of the present invention may have following beneficial effects.

The access request, requesting for obtaining a specific media resource and sent from the terminal device is received by the router, and the media resource can be provided to the terminal device if there is the media resource in the router corresponding to the data identifier carried in the access request. The router can query whether there is the media resource therein corresponding to the data identifier according to the access request requesting for obtaining the media resource, and provide the media resource to the terminal device if the media resource corresponding to the data identifier is stored in the router. Accordingly, it is solved a problem that network traffic may be wasted due to a repeated forwarding of a same media resource accessing request to an extranet server from the router receiving the same, as well as due to a repeated transmission of a same media resource from the extranet server. Thus the network traffic can be saved.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart illustrating a method for providing a media resource according to an exemplary embodiment.
Fig. 2 is a flow chart illustrating a method for providing a media resource according to another exemplary embodiment.
Fig. 3 is a block diagram illustrating an apparatus for providing a media resource according to an exemplary embodiment.
Fig. 4 is a block diagram illustrating an apparatus for providing a media resource according to another exemplary embodiment.
Fig. 5 is a block diagram illustrating a device for providing a media resource according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

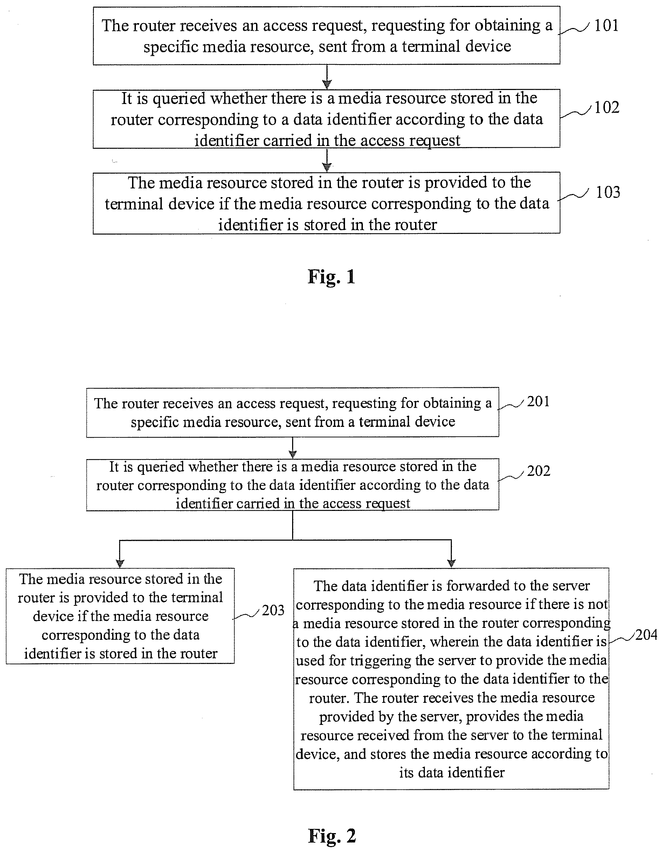

Fig. 1 is a flow chart illustrating a method for providing a media resource according to an exemplary embodiment. The method for providing a media resource can be performed by a router and, as shown in Fig. 1, includes the following steps.

In step 101, the router receives an access request, requesting for obtaining a specific media resource, sent from a terminal device.

The media resource may be of any types of resources available through network, such as music resource, video resource or image resource.

In step 102, it is queried whether there is a media resource stored in the router corresponding to a data identifier, according to the data identifier carried in the access request.

In step 103, the media resource stored in the router is provided to the terminal device if the media resource corresponding to the data identifier is stored in the router.

As described above, according to the method for providing a media resource provided by the present invention, the access request, requesting for obtaining a specific media resource and sent from the terminal device is received by the router, and the media resource can be provided to the terminal device if there is the media resource in the router corresponding to the data identifier carried in the access request. The router can query whether there is the media resource therein corresponding to the data identifier according to the access request requesting for obtaining the media resource, and provide the media resource to the terminal device if the media resource corresponding to the data identifier is stored in the router. Accordingly, it is solved a problem that network traffic may be wasted due to a repeated forwarding of a same media resource accessing request to an extranet server from the router receiving the same, as well as due to a repeated transmission of a same media resource from the extranet server. Thus the network traffic can be saved.

Fig. 2 is a flow chart illustrating a method for providing a media resource according to another exemplary embodiment. The method for providing a media resource can be performed by a router and, as shown in Fig. 2, includes the following steps.

In step 201, the router receives an access request, requesting for obtaining a specific media resource, sent from a terminal device.

The media resource may be of any types of resources available through network, such as music resource, video resource or image resource.

A data identifier is generally carried in the access request and, may be an access address or an identifier of a media resource in a server.

A typical data identifier is generally an access address which may be a network address for providing the media resource, that is, an URL (Uniform Resource Locator). The access address may be generally used to indicate a storage location of a corresponding media resource on network.

When the access request is transmitted to the router, it is encapsulated by the terminal device according to an OSI (Open System Interconnection) 7-layer protocol layer by layer. Accordingly, it is received by the router an access request encapsulating the data identifier, which can be deemed as a data packet.

After the data packet encapsulating the data identifier is obtained by the router, it can be decapsulated according to the OSI 7-layer protocol so as to get the data identifier therein.

In some embodiment, when the data packet encapsulating the data identifier sent from the terminal device is received by the router, it can be intercepted by the router.

Herein, the data packet can be intercepted by means of a Netfilter framework as following. Five hook functions are defined in IPv4 (Internet Protocol version 4), and will be called, respectively, when a data packet flows through a corresponding key position. After the data packet is verified according to IP (Internet Protocol), it may arrive at the first hook function NF_IP_PRE_ROUTING, which is used for determine whether the data packet is to be forwarded to an extranet server or the current router, to be processed. As the data packet is required to be parsed, the hook function NF_IP_PRE_ROUTING can be configured to enable all of data packets to be transmitted to an upper layer protocol of the current router for a parse, and it may be determined whether to forward the data packets according to a result of the parse. The data packet transmitted to the upper layer protocol of the router can be restored into the data identifier of the media resource previously sent from the terminal device through a decapsulation in the router according to the OSI protocol.

In other words, after a data packet corresponding to the access request sent from the terminal device is received by the router, it is always transmitted to the upper layer protocol for a decapsulation to obtain the data identifier therein instead of being forwarded to a corresponding extranet server by default.

In step 202, it is queried whether there is a media resource stored in the router corresponding to the data identifier, according to the data identifier carried in the access request.

In some embodiment, in order to facilitate retrieving of the media resource, media resources can be stored by category according to the type thereof since there may be a relatively large amount of media resources stored in the router. Accordingly, before querying whether there is a media resource stored in the router corresponding to a data identifier, the router can determine a type of the media resource. Furthermore, to query whether there is a media resource stored in the router corresponding to a data identifier, the router can query whether there is a media resource corresponding to a data identifier stored in a storage space of the router corresponding to the type.

In other words, media resources stored in the router can be managed by category and media resources of a same type can be stored into a same category, so as to improve efficiency of the query in the router. Accordingly, to retrieve a media resource in the router, a type of the media resource can be determined firstly, and then it can be queried whether there is a media resource corresponding to the data identifier stored in the storage space corresponding to the type of the media resource.

In some embodiment, in order to determine the type of the media resource, a suffix of the data identifier (e.g. an access address) corresponding to the media resource can be utilized. For example, for an access address of a media resource: http://www.xxx.com/music/123.mp3, it can be seen that a file named 123.mp3, with a suffix of mp3 indicating a music file, is requested. After the type of the media resource is determined, the router can query whether there is a media resource having a name identical to the data identifier stored in a storage space thereof corresponding to the type of music files.

In some embodiment, in order to query whether there is a media resource stored in the router corresponding to a data identifier, according to the data identifier carried in the request, the router can query whether there is a media resource stored in the router having a name identical to the data identifier, according to the data identifier carried in the access request.

For the purpose of avoiding transmission error of media resource due to different media resources with a same name, the media resource can be stored in the router with the data identifier of the media resource, the identifier of the media resource corresponding to a substitute for the name thereof. That is, the data identifier can be used as an index for storing the media resource. Accordingly, the router can query whether there is a media resource having a name identical to the data identifier stored therein.

For example, if the data identifier is an access address, the access address can be used by the router as a substitute for the name of a corresponding media resource, so as to store the media resource. Thereafter, the router can query whether there is a media resource with the access address as its name stored therein.

In some embodiment, to query whether there is a media resource stored in the router having a name identical to the data identifier, the router can either query directly whether there is a media resource having a name identical to the data identifier stored in a storage thereof, or query whether there is a media resource having a name identical to the data identifier stored in a storage thereof corresponding to a type of the media resource.

A typical data identifier is generally an access address which may be relatively long. As data identifier are being used as names for a large amount of media resources stored in the router, the access addresses thereof may occupy a large size of storage space. Moreover, complexity and spent time for matching according to the access addresses may be substantially increased. Accordingly, the data identifier of the media resource can be processed by the router, such that a processed name of the media resource may have fewer characters than the data identifier, so that storage space occupied by the media resource as well as the complexity and spent time for matching to retrieve the media resource can be minimized.

As the data identifier of the media resource is processed, it can be processed according to a preset process rule so as to obtain a character string with fewer characters than the data identifier. Typically, the character string, obtained by processing characters of the data identifier according to the preset process rule, should correspond uniquely to the data identifier. Herein, the preset process rule may include a Hash algorithm or other like algorithms able to reduce characters of the data identifier.

For example, a data identifier (e.g. an access address) of a certain media resource may be http://www.xxx.com/music/123.mp3, having 32-bit characters. The access address of the media resource is processed by Hash operations, such that an operation result ADF2JLSD2JL093JSDLAD, having 20-bit characters, is obtained. Accordingly, the character string obtained by Hash operations has fewer characters than the data identifier.

After the character string is obtained by processing the data identifier according to the preset process rule, it can be used as a name of the media resource to be stored corresponding to the data identifier. Accordingly, when the router queries whether there is a media resource stored in the router corresponding to the data identifier, according to the data identifier carried in the access request, the following steps can be performed.

In the first step, a character string uniquely corresponding to the data identifier is obtained by processing the data identifier carried in the access request according to a preset process rule, wherein the preset process rule is used for reducing characters of the data identifier to be processed.

In the second step, it is queried whether there is a media resource stored in the router having a name identical to the character string.

Similarly, media resources stored in the router can be managed by category and media resources of a same type can be stored into a same category, so as to improve efficiency of the query in the router. Accordingly, to retrieve a media resource in the router, a type of the media resource can be determined firstly, and then it can be queried whether there is a media resource having a name identical to the obtained character string stored in the storage space corresponding to the type of the media resource.

That is, to query whether there is a media resource stored in the router having a name identical to the character string, the router can either query directly whether there is a media resource having a name identical to the character string stored in a storage space thereof, or query whether there is a media resource having a name identical to the character string stored in a storage space thereof corresponding to a type of the media resource.

For example, reference can be made to Table 1, which is a table created as media resources are stored in the router by category. As shown in Table 1, the media resources are sorted by the router into categories of music, video and image. Media resources of respective media resource types are stored in category rows corresponding to the media resource types with their names as indexes. That is, the media resources are stored with the media resource types as a primary index and the names thereof as a secondary index.

Accordingly, in order to retrieve a media resource, a type corresponding thereto may be firstly determined by a search based on the primary index, and then the media resource may be searched based on the secondary index in a storage space corresponding to the type, such that the media resource having a specified name can be retrieved. For example, still referring to Table 1, in order to retrieve a media resource with a type "music" and a processed name "ADF01JFSD4R", the type "music" of the media resource may be firstly determined, and then the media resource having the name "ADF01JFSD4R" can be searched in a storage space corresponding to music.

**Table 1**

| Resource Type | Name of Media Resource | | | | |
|---|---|---|---|---|---|
| Music | ADF1JFSD1R | ADF1JFSD2R | ADF1JFSD03R | ADF01JFSD4R | ADF1JFSD5R |
| Video | ADF12JFSD1R | ADF2JFSD2R | ADF21JFSD3R | ADF2JFSD84R | ADF2JFSD5R |
| Image | ADF3JFSD1R | ADF3JFSD02R | ADF3JFSD35R | ADF31JFSD4R | ADF39JFSD5R |

In step 203, the media resource stored in the router is provided to the terminal device if the media resource corresponding to the data identifier is stored in the router.

As same access requests are repeatedly forwarded to an extranet server and, thus a same media resource is repeatedly provided by the extranet server, network traffic may be wasted and response speed of the router may be deteriorated. Therefore, upon a query that the media resource corresponding to the data identifier is stored in the router, the router can provide the media resource directly to the terminal device and discard the data packet corresponding to the data identifier, rather than forwarding the data packet with the data identifier encapsulated therein to the extranet server, such that response speed of the router as well as user experience can be improved.

In step 204, the data identifier is forwarded to the server corresponding to the media resource if there is not a media resource stored in the router corresponding to the data identifier, wherein the data identifier is used for triggering the server to provide the media resource corresponding to the data identifier to the router. The router receives the media resource provided by the server, provides the media resource received from the server to the terminal device, and stores the media resource according to its data identifier.

If it is determined in step 202 that there is not a media resource stored in the router corresponding to the data identifier, the data identifier of the media resource should be encapsulated into a data packet at the router according to an OSI 7-layer protocol layer by layer, and the data packet with the data identifier of the media resource encapsulated therein may be forwarded to the server corresponding to the data identifier. Upon reception of the data packet, the server can decapsulate the data packet according to the OSI 7-layer protocol so as to obtain the data identifier therein. Then the media resource may be retrieved in the server and provided to the router. Accordingly, the media resource provided by the server may be stored according to a preset rule at the router. It should be noted that, the data packet with the data identifier encapsulated therein sent to the server by the router is of capability to trigger the server to provide the media resource to the router.

In some embodiment, upon storing the media resource according to the data identifier, the router can store the media resource with the data identifier of the media resource, the data identifier of the media resource corresponding to the name thereof.

For the purpose of avoiding transmission error of media resource due to different media resources with a same name, the media resource can be stored in the router with the data identifier of the media resource, the data identifier of the media resource corresponding to a substitute for the name thereof. That is, the data identifier can be used as an index for storing the media resource. Thus, upon storing a media resource, the router can store the media resource directly with a data identifier corresponding thereto to a name thereof.

In some embodiment, for the router to store the media resource according to the data identifier, the following steps can be included.
1) A character string uniquely corresponding to the data identifier is generated by processing the data identifier according to a preset process rule which is used for reducing characters of the data identifier to be processed.
2) The media resource is stored with the character string, the character string corresponding to the name of the media resource.

Similarly, a typical data identifier of a media resource is generally an access address which may be relatively long. As data identifier are being used as names for a large amount of media resources stored in the router, the access addresses thereof may occupy a large size of storage space. Moreover, complexity and spent time for matching according to the data identifier may be substantially increased. Accordingly, the data identifier of the media resource can be processed by the router, such that a processed name of the media resource may have fewer characters than the data identifier, so that storage space occupied by the media resource as well as the complexity and spent time for matching to retrieve the media resource can be minimized.

As the data identifier of the media resource is processed, it can be processed according to a preset process rule so as to obtain a character string with fewer characters than the data identifier. Typically, the character string, obtained by processing characters of the data identifier according to the preset process rule, should correspond uniquely to the data identifier. The preset process rule may be identical to that described in step 202 and, thus is omitted herein.

As can be seen from above, upon storing a media resource obtained from the server, the router can store the media resource therein with a corresponding character string, generated by processing a data identifier of the media resource according to a preset operation, the character string corresponding to the name of the media resource.

Similarly, media resources can be stored by category and the media resources of a same type can be stored into a same category in a storage space of the router, such that a speed for a subsequent retrieve of the media resources can be improved. Accordingly, for the router to store a media resource, the following steps can be included.
1) A type of the media resource is determined.
2) The media resource is stored into a storage space corresponding to the type.

The type of the media resource can be determined firstly by the router. A method for determining the type of the media resource may be identical to that in step 202 and, thus is omitted herein. Thereafter, a preset process can be performed by the router to an access address of the media resource, such that a character string can be generated by operations and used as a name of the media resource to be stored in a storage space corresponding to the type.

As can be seen from above, upon storing a media resource at the router, a data identifier of the media resource may be used directly as a name thereof. Otherwise, a character string, generated by processing the data identifier according to a preset process rule, may be used as a name of the media resource to be stored. In some embodiment, the media resource can be either stored directly, or stored in a storage space corresponding to a type of the media resource after the type is determined firstly.

A detailed process of the method will be described hereinafter taking an example in which music is played online via a PC (Personal Computer) browser.
1. There are at least three physical devices being involved in the example, a PC, a router and a web server in public network.
   The PC may refer to one or more PCs, and the web server may also refer to one or more web servers.
   In some embodiment, the PC may be substituted by other client terminals such as a tablet computer, a mobile phone, a multimedia player and the like.
2. The PC requests for a music file with a request carrying an access address of the music file therein. For example, the access address of the music file is http://www.xxx.com/music/123.mp3. The request may be encapsulated into a data packet at the PC according to the OSI 7-layer model protocol.
   In some embodiment, the music file may be substituted by a video file, an image file, and the like.
3. The data packet can be intercepted when it flows through kernel of the router. The router can parse the data packet after intercepting it. As a detailed means for interception, a Netfilter framework may be utilized. Briefly speaking, after the data packet is processed at the router by the first hook function NF_IP_PRE_ROUTING, it may arrived at routing codes which are used for determine whether the data packet is to be forwarded outwardly or locally. In some embodiment, the routing codes may be customized to enable all of received data packets to be transmitted to an upper layer locally, such that those data packets may be parsed by the router locally to obtain the data identifier therein. Accordingly, it can be queried whether there is a corresponding media resource in the router according to the data identifier.
4. After parsing the data packet, an access address URL carried in the request may be obtained as "http://www.xxx.com/music/123.mp3". Thereby, it can be determined by the router according to a suffix of the access address that this is a music file. Then it can be searched in a hard disk of the router whether there is a file corresponding to "http://www.xxx.com/music/123.mp3". For example, the access address "http://www.xxx. com/music/123.mp3" may be Hashed utilizing a Hash function to generate a Hashed character string "ADF2JLSD2JL093JSDLAD", and then it may be searched whether there is a file having a name "ADF2JLSD2JL093JSDLAD". If the file exists, the router can provide the file to the PC rather than forwarding the data packet onto the public network. If there is not such a file, the router can forward the data packet to the web server in the public network and caches locally the music file, with the access address after being Hashed as its name for storage, which is provided by the web server before providing the file to the PC.

To sum up, for any application program in any client terminal, as long as the music file in step 3 is requested, it can be provided directly to the client terminal without requesting on public network if it is already cached in the router. Accordingly, the router can enable the client terminal to play the music file online even without being connected with public network and, thus become a private household music cloud center.

As described above, according to the method for providing a media resource provided by the present invention, the access request, requesting for obtaining a specific media resource, sent from the terminal device is received by the router, and the media resource can be provided to the terminal device if there is the media resource in the router corresponding to the data identifier carried in the access request. The router can query whether there is the media resource therein corresponding to the data identifier according to the access request requesting for obtaining the media resource, and provide the media resource to the terminal device if the media resource corresponding to the data identifier is stored in the router. Accordingly, it is solved a problem that network traffic may be wasted due to repeated forwarding of a same media resource accessing request to an extranet server from the router receiving the same as well as repeated transmission of a same media resource from the extranet server. Thus the network traffic can be saved.

According to the method for providing a media resource provided by the present invention, the type of the media resource is determined and, it is queried in a storage corresponding to the type whether there is a media resource stored therein having a name identical to the data identifier or whether there is a media resource stored therein having a name identical to a character string generated by processing the data identifier. Accordingly, time spent for searching can be reduced, and efficiency of the searching can be improved.

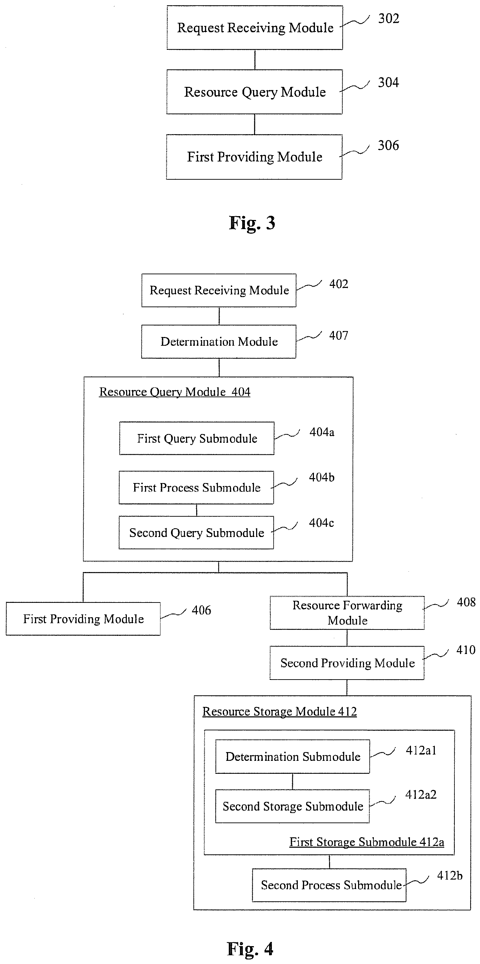

Fig. 3 is a block diagram illustrating an apparatus for providing a media resource according to an exemplary embodiment. The apparatus for providing a media resource is comprised in a router and, as shown in Fig. 3, includes a request receiving module 302, a resource query module 304 and a first providing module 306.

The request receiving module 302 is configured to receive at the router an access request, requesting for obtaining a specific media resource, sent from a terminal device.

The resource query module 304 is configured to query whether there is a media resource stored in the router corresponding to a data identifier, according to the data identifier carried in the access request received by the request receiving module 302.

The first providing module 306 is configured to provide the media resource stored in the router to the terminal device if the resource query module 304 determines that the media resource corresponding to the data identifier is stored in the router.

As described above, according to the apparatus for providing a media resource provided by the present invention, the access request, requesting for obtaining a specific media resource, sent from the terminal device is received by the router, and the media resource can be provided to the terminal device if there is the media resource in the router corresponding to the data identifier carried in the access request. The router can query whether there is the media resource therein corresponding to the data identifier according to the access request requesting for obtaining the media resource, and provide the media resource to the terminal device if the media resource corresponding to the data identifier is stored in the router. Accordingly, it is solved a problem that network traffic may be wasted due to a repeated forwarding of a same media resource accessing request to an extranet server from the router receiving the same, as well as due to a repeated transmission of a same media resource from the extranet server. Thus the network traffic can be saved.

Fig. 4 is a block diagram illustrating an apparatus for providing a media resource according to another exemplary embodiment. The apparatus for providing a media resource is comprised in a router and, as shown in Fig. 4, includes a request receiving module 402, a resource query module 404 and a first providing module 406.

The request receiving module 402 is configured to receive at the router an access request, requesting for obtaining a specific media resource, sent from a terminal device.

The resource query module 404 is configured to query whether there is a media resource stored in the router corresponding to a data identifier, according to the data identifier carried in the access request received by the request receiving module 402.

The first providing module 406 is configured to provide the media resource stored in the router to the terminal device if the resource query module 404 determines that the media resource corresponding to the data identifier is stored in the router.

In some embodiment, the resource query module 404 includes a first query submodule 404a.

The first query submodule 404a is configured to query whether there is a media resource stored in the router having a name identical to the data identifier, according to the data identifier carried in the access request.

Otherwise, the resource query module 404 includes a first process submodule 404b and a second query submodule 404c.

The first process submodule 404b is configured to generate a character string uniquely corresponding to the data identifier by processing the data identifier carried in the access request according to a preset process rule, wherein the preset process rule is used for reducing characters of the data identifier to be processed.

The second query submodule 404c is configured to query whether there is a media resource stored in the router having a name identical to the character string.

In some embodiment, the apparatus for providing a media resource further includes a determination module 407.

The determination module 407 is configured to determine a type of the media resource.

The resource query module 404 is further configured to query whether there is a media resource corresponding to the data identifier stored in a storage space of the router corresponding to the type determined by the determination module 407.

In some embodiment, the apparatus for providing a media resource further includes a resource forwarding module 408, a second providing module 410 and a resource storage module 412.

The resource forwarding module 408 is configured to forward the data identifier to a server corresponding to the media resource if the resource query module 404 determines that there is not a media resource stored in the router corresponding to the data identifier, wherein the data identifier is used for triggering the server to provide the media resource corresponding to the data identifier to the router.

The second providing module 410 is configured to receive the media resource provided by the server and provide the media resource received from the server to the terminal device.

The resource storage module 412 is configured to store the media resource according to the data identifier.

In some embodiment, the resource storage module 412 includes a first storage submodule 412a.

The first storage submodule 412a is configured to store the media resource with the data identifier of the media resource, the data identifier of the media resource corresponding to the name of the media resource.

Otherwise, the resource storage module 412 includes a second process submodule 412b.

The second process submodule 412b is configured to generate a character string uniquely corresponding to the data identifier by processing the data identifier according to a preset process rule, wherein the preset process rule is used for reducing characters of the data identifier to be processed.

The first storage submodule 412a is further configured to store the media resource with the character string, the character string corresponding to the name of the media resource.

In some embodiment, the first storage submodule 412a includes a determination submodule 412a1 and a second storage submodule 412a2.

The determination submodule 412a1 is configured to determine a type of the media resource.

The second storage submodule 412a2 is configured to store the media resource into a storage space corresponding to the type.

As described above, according to the apparatus for providing a media resource provided by the present invention, the access request, requesting for obtaining a specific media resource, sent from the terminal device is received by the router, and the media resource can be provided to the terminal device if there is the media resource in the router corresponding to the data identifier carried in the access request. The router can query whether there is the media resource therein corresponding to the data identifier according to the access request requesting for obtaining the media resource, and provide the media resource to the terminal device if the media resource corresponding to the data identifier is stored in the router. Accordingly, it is solved a problem that network traffic may be wasted due to a repeated forwarding of a same media resource accessing request to an extranet server from the router receiving the same, as well as due to a repeated transmission of a same media resource from the extranet server. Thus the network traffic can be saved.

According to the apparatus for providing a media resource provided by the present invention, the type of the media resource is determined and, it is queried in a storage corresponding to the type whether there is a media resource stored therein having a name identical to the data identifier or whether there is a media resource stored therein having a name identical to a character string generated by processing the data identifier. Accordingly, time spent for searching can be reduced, and efficiency of the searching can be improved.

With respect to the apparatuses in the above embodiments, the specific manners for performing operations for individual modules therein have been described in detail in the embodiments regarding the methods, which will not be elaborated herein.

There is provided a device for providing a media resource according to an exemplary embodiment of the present invention. The device for providing a media resource is able to perform the method for providing a media resource provided by the present invention, and includes a processor and a memory for storing instructions executable by the processor.

The processor is configured to perform:
receiving at a router an access request, requesting for obtaining a specific media resource, sent from a terminal device;
querying whether there is a media resource stored in the router corresponding to a data identifier, according to the data identifier carried in the access request; and
providing the media resource stored in the router to the terminal device if the media resource corresponding to the data identifier is stored in the router.

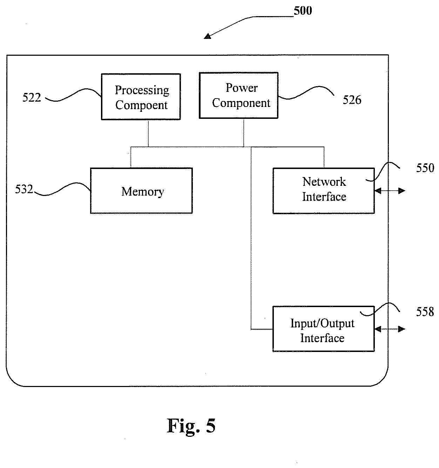

FIG. 5 is a block diagram of a device for providing a media resource, according to an exemplary embodiment. For example, the device 500 may be provided as a server. Referring to FIG. 5, the device 500 includes a processing component 522 that further includes one or more processors, and memory resources represented by a memory 532 for storing instructions executable by the processing component 522, such as application programs. The application programs stored in the memory 532 may include one or more modules each corresponding to a set of instructions. Further, the processing component 522 is configured to execute the instructions to perform the above described method for providing a media resource.

The device 500 may also include a power component 526 configured to perform power management of the device 500, wired or wireless network interface(s) 550 configured to connect the device 500 to a network, and an input/output (I/O) interface 558. The device 500 may operate based on an operating system stored in the memory 532, such as Windows ServerTM, Mac OS XTM, UnixTM, LinuxTM, FreeBSDTM, or the like.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for providing a media resource, **characterized in that** the method comprises:
receiving by a router an access request, requesting for obtaining a specific media resource, sent from a terminal device;
querying whether there is a media resource stored in the router corresponding to a data identifier, according to the data identifier carried in the access request; and
providing the media resource stored in the router to the terminal device if the media resource corresponding to the data identifier is stored in the router.

2. The method according to claim 1, **characterized in that** the step of querying whether there is a media resource stored in the router corresponding to a data identifier, according to the data identifier carried in the access request comprises:
querying whether there is a media resource stored in the router, having a name identical to the data identifier according to the data identifier carried in the access request;
or, the step of querying whether there is a media resource stored in the router corresponding to a data identifier, according to the data identifier carried in the access request comprises:
generating a character string uniquely corresponding to the data identifier by processing the data identifier carried in the access request according to a preset process rule for reducing characters of the data identifier to be processed; and
querying whether there is a media resource stored in the router having a name identical to the character string.

3. The method according to claim 1 or 2, **characterized in that** before the step of querying whether there is a media resource stored in the router corresponding to a data identifier, the method further comprises:
determining a type of the media resource; and
the step of querying whether there is a media resource stored in the router corresponding to a data identifier comprises: querying whether there is a media resource corresponding to the data identifier stored in a storage space, corresponding to the type, of the router.

4. The method according to claim 1, **characterized in that** the method further comprises:
forwarding the data identifier to a server corresponding to the media resource if there is not a media resource stored in the router corresponding to the data identifier, the data identifier triggering the server to provide the media resource corresponding to the data identifier to the router;
receiving the media resource provided by the server, and providing the media resource received from the server to the terminal device; and
storing the media resource according to the data identifier.

5. The method according to claim 4, **characterized in that** the step of storing the media resource according to the data identifier comprises:
storing the media resource with the data identifier of the media resource, the data identifier corresponding to the name of the media resource;
or, the step of storing the media resource according to the data identifier comprises:
generating a character string uniquely corresponding to the data identifier by processing the data identifier according to a preset process rule for reducing characters of the data identifier to be processed; and
storing the media resource with the character string, the character string corresponding to the name of the media resource.

6. The method according to claim 4 or 5, **characterized in that** the step of storing the media resource comprises:
determining a type of the media resource; and
storing the media resource into a storage space corresponding to the type.

7. An apparatus for providing a media resource, **characterized in that** the apparatus comprises:
a request receiving module configured to receive at a router an access request, requesting for obtaining a specific media resource, sent from a terminal device;
a resource query module configured to query whether there is a media resource stored in the router corresponding to a data identifier, according to the data identifier carried in the access request received by the request receiving module; and
a first providing module configured to provide the media resource stored in the router to the terminal device if the resource query module determines that the media resource corresponding to the data identifier is stored in the router.

8. The apparatus according to claim 7, **characterized in that** the resource query module comprises:
a first query submodule configured to query whether there is a media resource stored in the router having a name identical to the data identifier, according to the data identifier carried in the access request;
or, the resource query module comprises:
a first process submodule configured to generate a character string uniquely corresponding to the data identifier by processing the data identifier carried in the access request according to a preset process rule for reducing characters of the data identifier to be processed; and
a second query submodule configured to query whether there is a media resource stored in the router having a name identical to the character string.

9. The apparatus according to claim 7 or 8, **characterized in that** the apparatus further comprises:
a determination module configured to determine a type of the media resource; and
the resource query module is further configured to query whether there is a media resource corresponding to the data identifier stored in a storage space, corresponding to the type determined by the determination module, of the router.

10. The apparatus according to claim 7, **characterized in that** the apparatus further comprises:
a resource forwarding module configured to forward the data identifier to a server corresponding to the media resource if the resource query module determines that there is not a media resource stored in the router corresponding to the data identifier, the data identifier triggering the server to provide the media resource corresponding to the data identifier to the router;
a second providing module configured to receive the media resource provided by the server and provide the media resource received from the server to the terminal device; and
a resource storage module configured to store the media resource according to the data identifier.

11. The apparatus according to claim 10, **characterized in that** the resource storage module comprises:
a first storage submodule configured to store the media resource with the data identifier of the media resource, the data identifier of the media resource corresponding to the name of the media resource;
or, the resource storage module comprises:
a second process submodule configured to generate a character string uniquely corresponding to the data identifier by processing the data identifier according to a preset process rule for reducing characters of the data identifier to be processed; and
the first storage submodule is further configured to store the media resource with the character string, the character string corresponding to the name of the media resource.

12. The apparatus according to claim 10 or 11, **characterized in that** the first storage submodule comprises:
a determination submodule configured to determine a type of the media resource; and
a second storage submodule configured to store the media resource into a storage space corresponding to the type.

13. A device for providing a media resource, **characterized in that**, the device comprises:
a processor; and
a memory for storing instructions executable by the processor;
wherein the processor is configured to perform:
receiving at a router an access request, requesting for obtaining a specific media resource, sent from a terminal device;
querying whether there is a media resource stored in the router corresponding to a data identifier according to the data identifier carried in the access request; and
providing the media resource stored in the router to the terminal device if the media resource corresponding to the data identifier is stored in the router.
